# FASCICULE DE BREVET EUROPEEN

(11) **EP 1 519 180 B1**
(45) Date de publication et mention de la délivrance du brevet: **09.12.2009**
(21) Numéro de dépôt: 04104534.5
(22) Date de dépôt: 20.09.2004
(51) Int. Cl.: G01M 9/06, G01D 11/30

(54) **Dispositif et procédé pour mesure de paramètres en essai de vol d'un aeronef**
Vorrichtung und Verfahren zum Messen der Parameter bei Prüfungen während des Fluges eines Luftfahrzeug
Device and method for measuring the aircraft-flight-test parameters

(30) Priorité: 26.09.2003 FR 0311339
(43) Date de publication de la demande: 30.03.2005
(73) Titulaire: AIRBUS France, 31060 Toulouse (FR)
(72) Inventeur: Magnin, Hervé, 31130, Flourens (FR)
(74) Mandataire: Poulin, Gérard

(56) Documents cités:
- EP-A- 0 813 049
- US-A- 2 440 198
- US-A- 2 602 329

## Description

Le sujet de cette invention concerne un dispositif pour la mesure de paramètres lors des essais de vol d'un aéronef, ainsi qu'un procédé exploitant en dispositif.

Des capteurs, notamment de pression et de bruit, doivent être placés à la surface extérieure d'aéronefs pendant les essais pour mesurer les paramètres correspondants pendant le vol. Ils peuvent être disposés dans des trous opérés dans l'aéronef, mais il est évident que cette façon endommageante de procéder ne saurait être préférée ; elle n'est pas possible si des réservoirs ou d'autres équipements sont placés juste derrière la surface.

Le montage des capteurs sur la surface de l'aéronef s'effectue alors par l'entremise d'un support. Dans une conception connue, ce support est un disque en aluminium rigide dans la surface supérieure de laquelle le capteur est disposé. La liaison du disque à la surface extérieure de l'aéronef s'effectue par des produits à double face adhésive.

Cette conception présente plusieurs inconvénients. Il peut tout d'abord être difficile de bien faire adhérer le disque à la surface de l'aéronef, dont la courbure est généralement différente. Cette courbure impose aussi de boucher le jeu apparaissant entre la périphérie du disque et la surface extérieure de l'aéronef par un joint de mastic, ce qui est fastidieux et impose d'attendre la polymérisation pendant de longues heures, en devant abriter le joint et éventuellement reprendre des défauts. Le démontage du disque après l'essai est aussi fastidieux, puisqu'il faut ôter le mastic puis découper l'adhésif de liaison, situé non loin du centre du disque, en introduisant une lame sous le disque et en procédant à l'aveuglette, avec le risque d'endommager la surface de l'aéronef. Enfin, les essais eux-mêmes sont souvent altérés par l'épaisseur assez grande du disque qui forme un relief à la surface de l'aéronef, quoique le disque soit biseauté à son pourtour pour éviter une discontinuité trop brusque de surface.

Une autre conception du support permet de réduire ce dernier inconvénient d'altération des mesures. Une réalisation en est décrite dans le brevet français 2 749 656 : le support comprend alors une plaque fine de surface importante et faite sur mesure pour suivre la courbure de la surface de l'aéronef à l'endroit où elle doit être installée. La liaison de la plaque à la surface de l'aéronef s'effectue encore par un adhésif à double face, mais qui présente une épaisseur suffisante pour qu'un jeu, dans lequel les capteurs sont logés, subsiste entre la plaque et la surface de l'aéronef.

Il est manifeste que la fabrication sur mesure de la plaque est coûteuse et longue. On retrouve les inconvénients du joint de mastic, qui doit encore être employé pour combler le jeu entre le pourtour de la plaque et la structure de l'aéronef. Enfin, la plaque est toujours détruite au démontage et ne peut donc être qu'à usage unique. On doit ajouter que cette conception ne convient pas pour les capteurs de bruit, qui doivent être liés à la plaque et donc installés avec elle, avec un risque de destruction que leur coût rend inacceptable.

Un nouveau support de capteur est proposé dans ce domaine technique comme amélioration des précédents. La conception d'un petit support, en forme sensiblement de disque, est reprise mais d'une façon différente. La nouvelle conception assure un montage et un démontage faciles d'un support simple à fabriquer et qui perturbe peu les mesures, et même moins qu'en employant une plaque fine.

Sous sa forme la plus générale, le dispositif est original en ce que le support est composé d'un insert rigide sur lequel le capteur est monté et d'une enveloppe souple entourant l'insert et adhérant à une portion de la surface extérieure de l'aéronef. L'enveloppe souple s'ajuste à la surface de l'aéronef en ne formant qu'un relief réduit. L'adhésif à double face permet de la lier à cette surface avec un bon ajustement du pourtour qui exempte de devoir compléter l'assemblage par du mastic. Au démontage, l'enveloppe est déchirée facilement et permet d'accéder sans difficulté à l'adhésif pour l'enlever. La destruction du support ne présente que peu d'inconvénient puisque son coût est bas. Enfin, les propriétés amortissantes généralement associées aux matières souples permettent d'isoler le capteur des vibrations de l'aéronef pour peu qu'il ne soit pas en contact direct avec celui-ci, ce qui améliore encore les mesures.

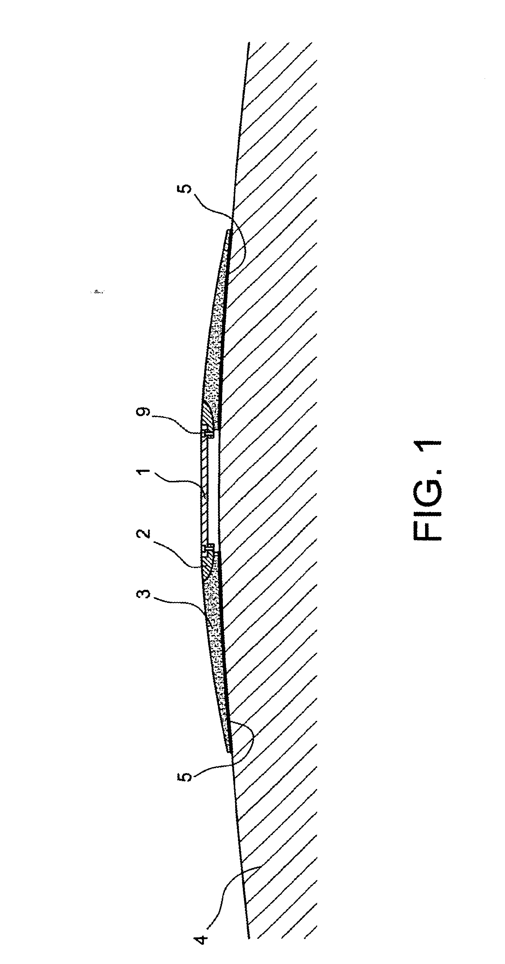

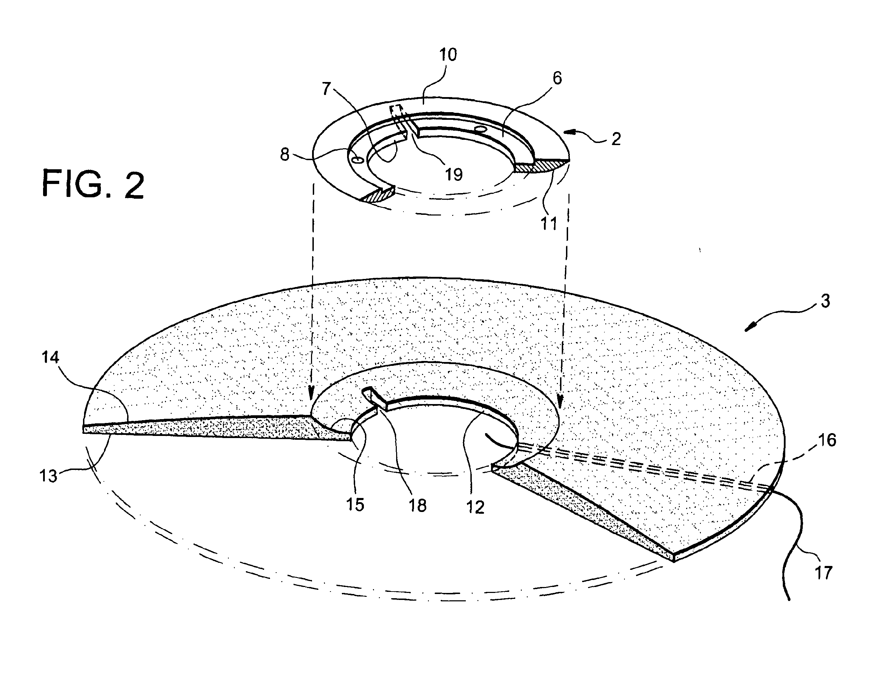

L'invention sera maintenant décrite en liaison aux figures, dont la figure 1 est une coupe du dispositif à l'état monté sur l'aéronef et la figure 2 est une perspective en éclaté.

Le dispositif de mesure comprend un capteur 1 qui en constitue la partie active et peut consister en un microphone plat dans le cas de mesures de bruit. Le capteur 1 est logé sur un insert 2 lui-même logé dans une enveloppe 3 collée à la surface extérieure d'une structure d'aéronef 4 par de l'adhésif à double face 5 qui garnit la face inférieure 13 de l'enveloppe 3. L'insert 2 est en forme de couronne évidée en son centre et comprend un gradin 6 autour de l'évidement, formant le fond d'un logement 7 donnant à la surface extérieure de l'insert 2 et dans lequel le capteur 1 est disposé. Le capteur 1 est retenu par des taraudages 8 opérés sous le gradin 6 et recevant des vis 9 correspondantes représentées à la figure 1. La surface supérieure 10 de l'insert 2 est plane et sa surface inférieure 11, par laquelle l'insert 2 est lié de façon adhérente à l'enveloppe 3, est courbe et convexe. L'insert 2 ne sert qu'à loger et retenir le capteur par les moyens de montage à celui-ci et par l'évidement et n'a donc que des dimensions peu supérieures à lui.

L'enveloppe 3 est en forme de disque s'effilant vers la périphérie. Elle assure l'adhérence à la structure 4 et a donc une superficie plus grande que l'insert 2. La face inférieure 13 est plate à l'état libre et la face supérieure 14 est conique ou plus généralement bombée. Cependant, un évidement 12 est aussi formé au centre de l'enveloppe 3, et la face supérieure 14 forme un logement 15 de réception de l'insert 2. La face inférieure 13 est entaillée d'une rainure 16 radiale pour le passage de fils 17 menant au capteur 1. Des encoches 18 et 19 sont établies en prolongement dans les évidements de l'enveloppe 3 et de l'insert 2 pour donner accès aux parties du capteur 1 auxquels les fils 17 aboutissent.

L'insert 2 rigide est avantageusement en matière inaltérable comme l'acier inoxydable, et l'enveloppe 3 souple en un polymère comme le fluorosilicone. Ainsi, l'enveloppe 3 s'ajuste parfaitement à la courbure de la structure 4. L'adhésif à double face 5 disposé sous toute la superficie de l'enveloppe 3 est complètement employé pour assurer l'adhérence de l'enveloppe à la structure 4. Aucun jeu notable n'apparaît à la périphérie de l'enveloppe 3 : aucun bouchage au mastic n'est plus nécessaire. Une autre conséquence de la souplesse de l'enveloppe 3 et de l'étroitesse de l'ajustement à la structure 4 est que la perturbation de forme produite par le dispositif sur la structure 4 est beaucoup plus petite qu'avec les conceptions antérieures et qu'ainsi les mesures seront moins faussées. Pour le même motif, il est avantageux que le capteur 1 affleure à la surface supérieure de l'insert 2, et qu'elle-même affleure à la surface supérieure 10 de l'enveloppe 3, afin d'obtenir une surface supérieure lisse et continue pour le dispositif. La liaison de l'insert 2 et de l'enveloppe 3 peut être assurée par une vulcanisation ou un collage qui résiste aux flexions infligées à celle-ci.

Comme l'enveloppe 3 a une plus grande épaisseur que l'insert 2 au centre, celui-ci ne touche pas la structure 4 et ne transmet pas ses vibrations au capteur 1 ; elles sont amorties dans l'enveloppe 3.

Les matériaux proposés dans cet exemple résistent bien aux différentes températures auxquelles ils peuvent être soumis, ainsi qu'aux conditions climatiques ordinaires. La résistance au changement de pression et la dureté sont bonnes. Il en va de même de la résistance chimique à l'eau et aux liquides transportés par l'aéronef. Une dilatation de l'insert 2 peut être absorbée par l'enveloppe 3 . Le dispositif peut être exploité en vol réel de l'aéronef ou en vol simulé, en soufflerie par exemple.

## Revendications

1. Dispositif de mesure à placer sur une portion (4) de surface extérieure d'aéronef, comprenant un capteur (1) et un support, **caractérisé en ce que** le support est composé d'un insert (2) rigide sur lequel le capteur est monté et d'une enveloppe (3) souple entourant l'insert et adhérant à la portion de surface.

2. Dispositif de mesure selon la revendication 1, **caractérisé en ce que** l'insert (2) rigide est lié à l'enveloppe souple et muni de moyens de montage (8) du capteur.

3. Dispositif de mesure selon la revendication 1 ou 2, **caractérisé en ce que** l'insert est en acier inoxydable et l'enveloppe en fluorosilicone.

4. Dispositif de mesure selon l'une quelconque des revendications 1 à 3, **caractérisé en ce que** l'enveloppe à l'état libre possède une face inférieure (13) plane et une face supérieure (14) bombée mais munie d'un logement (15) central de réception de l'insert (2).

5. Dispositif de mesure selon la revendication 4, **caractérisé en ce que** l'enveloppe a une épaisseur plus grande que l'insert à une portion centrale.

6. Dispositif de mesure selon l'une quelconque des revendications 1 à 5, **caractérisé en ce que** l'insert est muni d'un logement (7) pour le capteur (1) à une face extérieure, le capteur (1) affleure à la face extérieure de l'insert et l'insert (2) affleure à une face de l'enveloppe (3).

7. Dispositif de mesure selon l'une quelconque des revendications 1 à 6, **caractérisé en ce que** l'enveloppe est munie d'une rainure (16) de passage de fils (17) de connexion du capteur à une face inférieure (13).

8. Dispositif de mesure selon l'une quelconque des revendications 1 à 7, **caractérisé en ce que** l'enveloppe est jointe à l'insert par collage ou vulcanisation.

9. Procédé de mesure de paramètres d'un aéronef, comme le bruit ou la pression, **caractérisé en ce qu'**il repose sur au moins un dispositif conforme à une quelconque des revendications précédentes, les mesures étant faites en condition réelle ou en simulation de vol.

## Claims

1. Measuring device to be installed on a portion (4) of an aircraft outside surface, comprising a sensor (1) and a support, **characterized in that** the support is composed of a rigid insert (2) on which the sensor is installed and a flexible envelope (3) surrounding the insert and bonding to the portion of the surface.

2. Measuring device according to claim 1, **characterized in that** the rigid insert (2) is bonded to the flexible envelope and fitted with means (8) of assembly of the sensor.

3. Measuring device according to either claim 1 or 2, **characterized in that** the insert is made of stainless steel and the envelope is made of fluorosilicone.

4. Measuring device according to any one of claims 1 to 3, **characterized in that** the bottom face (13) of the envelope in the free state is flat and the top face (14) is convex but fitted with a central reception housing (15) for the insert (2).

5. Measuring device according to claim 4, **characterized in that** the area of the envelope is larger than the area of the insert in a central portion.

6. Measuring device according to any one of claims 1 to 5, **characterized in that** the insert is fitted with a housing (7) for the sensor (1) at an external face, the sensor (1) is flush with the external face of the insert and the insert (2) is flush with one face of the envelope (3).

7. Measuring device according to any one of claims 1 to 6, **characterized in that** the envelope is fitted with a groove (16) to allow passage of the wires (17) connecting the sensor to a bottom face (13).

8. Measuring device according to any one of claims 1 to 7, **characterized in that** the bond between the insert and the envelope is made by gluing or vulcanization.

9. Method for measuring the parameters of an aircraft, such as noise or pressure, **characterized in that** it is based on at least one device according to any one of the above claims, the measurements being made in real flight of the aircraft, or in simulated flight.

## Patentansprüche

1. Messvorrichtung zur Anordnung auf einem Teil (4) der äußeren Oberfläche eines Luftfahrzeugs, umfassend einen Meßfühler (1) und einen Träger, **dadurch gekennzeichnet, dass** der Träger aus einem starren Einsatz (2), auf dem der Messfühler angebracht ist, und einer weichen Ummantelung (3), die den Einsatz umschließt und an dem Oberflächenteil haftet, aufgebaut ist.

2. Meßvorrichtung nach Anspruch 1, **dadurch gekennzeichnet, dass** der starre Einsatz (2) mit der weichen Ummantelung verbunden ist und mit Mitteln (8) zur Anbringung des Messfühlers ausgestattet ist.

3. Messvorrichtung nach Anspruch 1 oder 2, **dadurch gekennzeichnet, dass** der Einsatz aus nicht rostendem Stahl und die Ummantelung aus Fluorsilicon ist.

4. Messvorrichtung nach einem der Ansprüche 1 bis 3, **dadurch gekennzeichnet, dass** die Ummantelung im freien Zustand eine ebene Unterseite (13) und eine gekrümmte Oberseite (14), die jedoch mit einem zentralen Lager (15) zur Aufnahme des Einsatzes (2) ausgestattet ist, aufweist.

5. Meßvorrichtung nach Anspruch 4, **dadurch gekennzeichnet, dass** die Ummantelung in einem zentralen Teil eine größere Dicke als der Einsatz aufweist.

6. Messvorrichtung nach einem der Ansprüche 1 bis 5, **dadurch gekennzeichnet, dass** der Einsatz mit einem Lager (7) für den Messfühler (1) auf einer äußeren Seite ausgestattet ist, der Messfühler (1) bündig mit der äußeren Seite des Einsatzes abschließt und der Einsatz (2) bündig mit einer Seite der Ummantelung (3) abschließt.

7. Messvorrichtung nach einem der Ansprüche 1 bis 6, **dadurch gekennzeichnet, dass** die Ummantelung mit einer Brille (16) zum Hindurchführen von Verbindungsdrähten (17) des Messfühlers auf einer Unterseite (13) ausgestattet ist.

8. Messvorrichtung nach einem der Ansprüche 1 bis 7, **dadurch gekennzeichnet, dass** die Ummantelung durch Verklebten oder Vulkanisierung mit dem Einsatz verbunden ist.

9. Verfahren zur Messung von Parametern eines Luftfahrzeugs, wie Lärm oder Druck, **dadurch gekennzeichnet, dass** es auf mindestens einer Vorrichtung gemäß einem der vorhergehenden Ansprüche beruht, wobei die Messungen unter realen Bedingungen oder als Flugsimulation durchgeführt werden.
